Europäisches Patentamt

(19) European Patent Office

Office européen des brevets

(11) **EP 0 903 177 B1**

(12) **FASCICULE DE BREVET EUROPEEN**

(45) Date de publication et mention
de la délivrance du brevet:
**13.10.2004 Bulletin 2004/42**

(51) Int Cl.⁷: **B01J 23/85**, B01J 21/04

(21) Numéro de dépôt: **98401225.2**

(22) Date de dépôt: **20.05.1998**

(54) **Procédé de préparation d'un catalyseur d'hydrotraitement sous forme d'extrudés**

Verfahren zur Herstellung von Hydrotreating-Katalysatoren in Form von Extrudaten

Process for preparing hydrotreating catalyst in form of extrudates

(84) Etats contractants désignés:
**BE DE DK NL**

(30) Priorité: **10.06.1997 FR 9707149**

(43) Date de publication de la demande:
**24.03.1999 Bulletin 1999/12**

(73) Titulaire: **Institut Français du Pétrole**
**92500 Rueil Malmaison (FR)**

(72) Inventeurs:
• **Harle, Virginie**
**60270 Gouvieux (FR)**
• **Kasztelan, Slavik**
**92500 Rueil Malmaison (FR)**
• **Morel, Frédéric**
**69340 Francheville (FR)**
• **Kressmann, Stéphane**
**69360 Serezin du Rhone (FR)**
• **Courty, Philippe**
**94800 Villejuif (FR)**

(56) Documents cités:
EP-A- 0 015 196       EP-A- 0 155 824
EP-A- 0 514 229       EP-A- 0 518 106
GB-A- 1 390 530       US-A- 4 166 100
US-A- 4 499 203

• "Kirk-Othmer Encyclopedia of Chemical
Technology, Third Edition, Volume 2 " 1989 ,
JOHN WILEY & SONS , NEW YORK XP002056545
* page 218 - page 223 * Table 1

Remarques:
Le dossier contient des informations techniques présentées postérieurement au dépôt de la demande et ne figurant pas dans le présent fascicule.

**Description**

La présente invention concerne un procédé de préparation d'un catalyseur d'hydroraffinage et/ou d'hydroconversion de charges hydrocarbonées (également appelés hydrotraitement), ledit catalyseur comprenant un support essentiellement à base d'alumine sous la forme d'extrudés, au moins un métal catalytique ou un composé de métal catalytique du groupe VIB (groupe 6 de la nouvelle notation de la table périodique des éléments), de préférence le molybdène et le tungstène, de façon encore plus préférée le molybdène, et au moins un métal catalytique ou un composé de métal catalytique du groupe VIII (groupe 8 de la nouvelle notation de la table périodique des éléments), de préférence le fer, le nickel ou le cobalt.

Un tel catalyseur fait objet de la demande WO 9856499 A qui bénéficie de la même date de priorité. L'utilisation d'un tel catalyseur fait objet de la demande EP 0 884 372 A déposée le même jour.

L'hydrotraitement des charges hydrocarbonées, telles que les coupes pétrolières soufrées, prend une importance de plus en plus grande dans la pratique du raffinage avec la nécessité croissante de réduire la quantité de soufre dans les coupes pétrolières et de convertir des fractions lourdes en fractions plus légères valorisables en tant que carburant. Il est en effet nécessaire, à la fois pour satisfaire les spécifications imposés par chaque pays pour les carburants commerciaux et pour des raisons économiques, de valoriser au mieux des bruts importés de plus en plus riches en fractions lourdes et en hétéroatomes et de plus en plus pauvres en hydrogène. Cette valorisation implique une réduction relativement importante du poids moléculaire moyen des constituants lourds, qui peut être obtenue par exemple au moyen de réactions de craquage ou d'hydrocraquage de charges préalablement raffinées, c'est-à-dire désulfurées et déazotées. Van Kessel et al expliquent en détail ce contexte dans un article publiés dans la revue Oil & Gas Journal, le 16 Février 1987 en pages 55 à 66.

Il est par ailleurs connu de l'homme du métier que lors des réactions d'hydrotraitement de fractions pétrolières contenant des complexes organométalliques, la plupart de ces complexes se détruisent en présence d'hydrogène, d'hydrogène sulfuré, et d'un catalyseur d'hydrotraitement. Le métal constitutif de ces complexes précipite alors sous forme d'un sulfure solide qui vient se fixer sur la surface interne des pores. C'est en particulier le cas des complexes du vanadium, du nickel, du fer, du sodium, du titane, du silicium, et du cuivre qui sont naturellement présents dans les pétroles bruts en plus ou moins grande abondance selon l'origine du pétrole, et qui, lors des opérations de distillation ont tendance à ce concentrer dans les fractions à point d'ébullition élevé et en particulier dans les résidus. C'est aussi le cas des liquéfiats de charbon qui renferment également des métaux, en particulier du fer et du titane. Le terme général hydrodémétallation (HDM) est utilisé pour désigner ces réactions de destruction des complexes organométalliques dans les hydrocarbures.

L'accumulation des dépôts solides dans les pores du catalyseur peut se poursuivre jusqu'au bouchage complet d'une partie des pores commandant l'accès des réactifs à une fraction du réseau poreux interconnecté de telle sorte que cette fraction devient inactive alors même que les pores de cette fraction sont seulement faiblement encombrés ou même intacts. Ce phénomène peut donc provoquer une désactivation prématurée et très importante du catalyseur. Il est particulièrement sensible dans le cas des réactions d'hydrodémétallation en présence d'un catalyseur hétérogène supporté. Par hétérogène, on entend non soluble dans la charge d'hydrocarbures. On constate en effet dans ce cas que les pores de la périphérie du grain s'obstruent plus vite que les pores centraux. De même, les bouches des pores s'obstruent plus vite que leurs autres parties. L'obstruction des pores va de pair avec une réduction progressive de leur diamètre, ce qui entraîne une limitation accrue de la diffusion des molécules et une accentuation du gradient de concentration, donc une accentuation de l'hétérogénéité du dépôt depuis la périphérie vers l'intérieur des particules poreuses au point que l'obstruction complète des pores débouchant à l'extérieur se produit très rapidement : l'accès à la porosité interne presque intacte des particules est alors fermé aux réactifs et le catalyseur est prématurément désactivé.

Le phénomène qui vient d'être décrit est bien connu sous le nom de "colmatage aux bouches des pores". Les preuves de son existence et l'analyse de ses causes ont été publiées à plusieurs reprises dans la littérature scientifique internationale, par exemple : "Catalyst deactivation through pore mouth plugging" présenté au 5ème symposium international sur le génie de la réation chimique à Houston, Texas, U.S.A. en Mars 1978, ou encore "Effects of feed metals on catalysts aging in hydroprocessing residuum" dans Industrial Engineering chemistry Process Design and Development, volume 20, pages 262 à 273 publié en 1981 par l'American Chemical Society, ou encore plus récemment dans "Effect of Catalyst pore structure on hydrotreating of heavy oil" présenté au congrès national de l'American Chemical Society à Las Vegas, U.S.A., le 30 Mars 1982.

Un catalyseur d'hydrotraitement de coupes hydrocarbonées lourdes contenant des métaux doit donc être composé d'un support catalytique présentant un profil de porosité particulièrement adapté aux contraintes diffusionnelles spécifiques aux hydrotraitements et notamment à l'hydrodémétallation.

Les catalyseurs usuellements employés dans les procédés d'hydrotraitement sont composés d'un support sur lequel sont déposés des oxydes métalliques, tels que par exemple les oxydes de cobalt, de nickel ou de molybdène. Le catalyseur est ensuite sulfuré pour transformer tout ou partie des oxydes métalliques en phase sulfures métalliques.

Le support est en général à base d'alumine, son rôle consiste à disperser la phase active et présenter une texture adaptée à une bonne captation des impuretées métalliques, tout en évitant les problèmes de colmatage mentionnés ci-dessus.

Ainsi, des catalyseurs présentant une répartition poreuse particulière sont décrits dans le brevet américain 4,395,329. Les supports à base d'alumine de l'art antérieur sont de deux types. Premièrement, il existe des extrudés d'alumine préparés à partir d'un gel d'alumine. Les catalyseurs d'hydrotraitement préparés à partir de ces extrudés présentent plusieurs inconvénients. Tout d'abord, le procédé de préparation de l'alumine gel est particulièrement polluant, contrairement à celui de l'alumine issue de la déshydratation rapide de l'hydrargillite, dite alumine flash. Ensuite, la porosité des supports à base d'alumine gel est surtout adaptée à l'hydrodésulfuration et l'hydrotraitement des coupes hydrocarbonées légères, et non aux autres types d'hydrotraitements. Par ailleurs, même si ces extrudés sont équilibrés dans leur rapport hydrodémétallation/hydrodésulfuration, leur capacité de rétention en hydrométallation est faible, en général d'au plus 30% poids, si bien qu'ils sont rapidement saturés et doivent être remplacés. En outre, compte tenu du coût de production élevé du gel d'alumine, la fabrication de ces catalyseurs est très coûteuse.

En second lieu, des billes d'alumine préparées par déshydratation rapide d'hydrargillite puis agglomération de la poudre d'alumine flash obtenue sont employées comme support de catalyseurs d'hydrotraitement de charges hydrocarbonnées contenant des métaux. Le coût de préparation de ces billes est moins élevé, toutefois afin de le maintenir à un niveau satisfaisant, il est nécessaire de préparer des billes d'un diamètre supérieur à 2 mm. En conséquence, les métaux ne peuvent pas s'introduire jusqu'au coeur des billes, et la phase catalytique qui s'y trouve n'est pas utilisée.

Des catalyseurs d'hydrotraitement préparés à partir d'extrudés d'alumine flash de plus petite taille et présentant une porosité adaptée à l'hydrotraitement, ne présenteraient pas tous ces inconvénients, mais il n'existe pas aujourd'hui de procédé industriel pour préparer de tels catalyseurs.

Le document US 4,499,203 décrit un catalyseur comprenant un support et au moins un métal catalytique choisi parmi le vanadium, le molybdène, le tungstène, le nickel, le cobalt ou le fer. Ce catalyseur consiste en une pluralité d'agglomérats juxtaposés formés d'une pluralité de plaquettes aciculaires. Ce catalyseur présente ainsi une porosité adaptée à l'hydrotraitement de charges hydrocarbonées contenant des métaux, avec une structure en "oursin" permettant d'accepter des dépôts notables de métaux. Il est également mentionné dans ce brevet la possibilité d'utiliser de l'alumine préparée par déshydratation rapide d'hydrargillite. Les procédés de fabrication industrielle des catalyseurs décrits dans ce document sont rependant plus particulièrement adaptés à la production de billes. Ce document ne décrit pas de procédé d'obtention d'extrudés d'alumine flash.

La présente invention concerne les procédés de préparation d'un catalyseur d'hydrotraitement de fractions carbonées, qui est utilisé dans des réactions d'hydrotraitement, notamment les réactions d'hydrogénation, d'hydrodéazotation, d'hydrodéoxygénation, d'hydrodéaromatisation, d'hydroisomérisation, d'hydrodéalkylation, d'hydrodéparaffinage, d'hydrocraquage, et d'hydrodésulfuration présentant une activité en hydrodémetallation au moins équivalente à celle des catalyseurs connus à ce jour de l'homme du métier, et permettant d'obtenir des résultats en hydrotraitement particulièrement élevés par rapport aux produits de l'art antérieur.

Le catalyseur comprend un support essentiellement à base d'alumine sous la forme d'extrudés, au moins un métal catalytique ou un composé de métal catalytique du groupe VIB (groupe 6 de la nouvelle notation de la table périodique des éléments), de préférence le molybdène et le tungstène, de façon encore plus préférée le molybdène, et au moins un métal catalytique ou un composé de métal catalytique du groupe VIII (groupe 8 de la nouvelle notation de la table périodique des éléments), de préférence le fer, le nickel ou le cobalt, de façon encore plus préférée le nickel.

Le support extrudé utilisé dans le catalyseur est essentiellement à base d'agglomérats d'alumine, lesdits agglomérats d'alumine sont obtenus par mise en forme d'une alumine de départ issue de la déshydratation rapide d'hydrargillite et présentent un volume poreux total d'au moins 0,6 cm$^3$/g, un diamètre moyen mésoporeux compris entre 15 et 36 nm (nanomètres) , et un taux d'alumine issue de la décomposition de la boehmite compris ente 5 et 70% en poids. Par alumine issue de la décomposition de la boehmite, il faut comprendre qu'au cours du procédé de préparation des extrudés, de l'alumine type boehmite s'est développée au point de représenter 5 à 70 % en poids de l'alumine totale, puis a été décomposée. Ce taux d'alumine issue de la décomposition de boehmite est mesuré par diffraction des rayons X sur l'alumine avant décomposition de ladite boehmite.

Le support extrudé du catalyseur peut également être obtenu par extrusion d'un mélange en proportions variables d'une poudre d'alumine issue de la déshydratation rapide d'hydrargillité (alumine flash), et d'au moins un gel d'alumine obtenu par exemple par précipitation de sels d'aluminium tels que le chlorure d'aluminium, le sulfate d'aluminium, le nitrate d'aluminium, l'acétate d'aluminium ou par hydrolyse d'alcoxydes d'aluminium tel que le triéthoxyde d'aluminium. De tels mélanges d'alumine flash et de gel d'alumine contiennent moins de 50% poids de gel d'alumine et de préférence de 1 à 45% poids de gel d'alumine.

On utilise comme support des extrudés d'alumine de diamètre généralement compris entre 0,5 et 10 mm, de préférence entre 0,8 et 3,2mm lorsque le catalyseur est mis en oeuvre en lit fixe, lesdits extrudés présentant les caractéristiques décrites ci-dessus. Sur ces extrudés, ou avant mise en forme par extrusion, on introduit par toute méthode connue, et à n'importe qu'elle étape de la préparation, de préférence par imprégnation ou comalaxage, les métaux catalytiques, à savoir au moins un métal catalytique ou un composé de métal catalytique du groupe VIB (groupe 6 de la nouvelle notation de la table périodique des éléments), de préférence le molybdène et le tungstène, de façon encore plus préférée le molybdène, et au moins un métal catalytique ou un composé de métal catalytique du groupe VIII (groupe 8 de la nouvelle notation de la table périodique des éléments), de préférence le fer, le nickel ou le cobalt, de façon encore plus préférée le nickel. Lesdits métaux peuvent éventuellement être mélangés au support par comalaxage à toute étape du procédé de préparation dudit support. Lorsqu'il y en a plusieurs, lesdits métaux des groupes VIB et VIII peuvent éventuellement être introduits au moins en partie séparement ou de façon simultanée lors de l'imprégnation ou du comalaxage avec le support, à toute étape de la mise en forme ou de la préparation.

Par exemple, il est possible de préparer le catalyseur au moyen d'un procédé de préparation comprenant les étapes suivantes :

a) Comalaxage de poudre d'alumine issue de la déshydratation rapide d'hydrargillité avec au moins un composé de métal catalytique du groupe VIB, et/ou au moins un composé de métal catalytique du groupe VIII, suivie éventuellement d'une maturation, et/ou d'un séchage, puis éventuellement une calcination.

b) Mise en forme par extrusion du produit obtenue à l'étape a.

Les métaux précités sont le plus souvent introduits sous forme de précurseurs tels que oxydes, acides, sels, complexes organiques, dans le catalyseur. La somme S des métaux des groupes VIB et VIII exprimés en oxydes introduits dans le catalyseurs est comprise entre 0 et 50% en poids, de préférence de 0,5 à 50% poids, de façon plus préférée de 0,5 à 40% poids. Il est donc possible selon l'invention d'utiliser le support en tant que catalyseur sans introduire de métal catalytique dans ledit catalyseur.

La préparation comprend ensuite généralement une maturation et un séchage, puis généralement un traitement thermique, par exemple une calcination, à une température comprise entre 400 et 800 degrés centigrades.

Le support dont l'emploi est un des éléments essentiels de l'invention est essentiellement à base d'alumine. Le support utilisé dans le procédé selon l'invention est obtenu par mise en forme d'une alumine de départ, issue de la déshydratation rapide d'hydrargillite, ladite mise en forme étant effectuée au moyen de l'un des procédés décrits ci-dessous.

Des procédés de préparation du catalyseur selon l'invention sont décrits ci-dessous, pour un support constitué d'alumine. Lorsque le support contient un ou plusieurs autres composés, il est possible d'introduire ledit ou lesdits composés ou un précurseur dudit ou desdits composés à n'importe qu'elle étape du procédé de préparation du support selon l'invention. Il est également possible d'introduire ledit ou lesdits composés par imprégnation de l'alumine mise en forme au moyen dudit ou desdits composés ou de tout précurseur dudit ou desdits composés.

Une premier procédé de mise en forme d'une alumine de départ issue de la déshydratation rapide d'hydrargillite comprend les étapes suivantes:

$a_1$. on part d'une alumine issue de la déshydratation rapide d'hydrargillite
$b_1$ on réhydrate l'alumine de départ,
$c_1$. on malaxe l'alumine réhydratée en présence d'une émulsion d'au moins un hydrocarbure dans l'eau,
$d_1$. on extrude la pâte à base d'alumine obtenue à l'étape $c_1$,
$e_1$. on sèche et on calcine les extrudés,
$f_1$. on soumet les extrudés issue de l'étape $e_1$ à un traitement hydrothermal acide en atmosphère confinée,
$g_1$. on sèche et calcine les extrudés issue de l'étape $f_1$.

Un deuxième procédé de mise en forme d'alumine à partir d'une alumine de départ issue de la déshydratation rapide d'hydrargillite, comprend les étapes suivantes :

$a_2$. on part d'une alumine de départ issue de la déshydratation rapide d'hydrargillite.
$b_2$ on met en forme l'alumine sous forme de billes en présence d'un porogène,
$c_2$. on fait mûrir les billes d'alumine obtenues,
$d_2$. on malaxe les billes issues de l'étape $c_2$ ce par quoi on obtient une pâte que l'on extrude,
$e_2$. on sèche et on calcine les extrudés obtenus,
$f_2$. on soumet les extrudés issue de l'étape $e_2$ à un traitement hydrothermal acide en atmosphère confinée,
$g_2$. on sèche et calcine les extrudés issus de l'étape $f_2$.

Un troisième procédé de mise en forme d'une alumine, à partir d'une alumine de départ issue de la déshydratation rapide d'hydrargillite comprend les étapes suivantes :

$a_3$ on part d'une alumine issue de la déshydratation rapide d'hydrargillite

$b_3$ on réhydrate l'alumine de départ

$c_3$ on malaxe l'alumine réhydratée avec un gel de pseudo-boehmite. ledit gel étant présent dans une teneur comprise entre 1 et 30% en poids par rapport à l'alumine réhydratée et au gel,

$d_3$ on extrude la pâte à base d'alumine obtenue à l'étape $c_3$

$e_3$ on sèche et on calcine les extrudés,

$f_3$ on soumet les extrudés issue de l'étape $e_3$ à un traitement hydrothermal acide en atmosphère confinée,

$g_3$ on sèche éventuellement, et on calcine les extrudés issus de l'étape $f_3$.

Ce procédé met en oeuvre les étapes identiques aux étapes $a_1$, $b_1$, $d_1$, $e_1$, $f_1$ et $g_1$ du premier procédé précédemment décrit.

Par contre, selon l'étape $c_3$, l'alumine réhydratée issue de l'étape $b_3$ est malaxée non pas avec une émulsion d'hydrocarbure, mais avec un gel de pseudo-boehmite dans une teneur comprise entre 1 et 30% en poids par rapport à l'alumine réhydratée et au gel, de préférence entre 5 et 20% en poids.

Un tel gel de pseudo-boehmite peut être obtenu par précipitation de sels d'aluminium tels que le chlorure d'aluminium, le sulfate d'aluminium, le nitrate d'aluminium, l'acétate d'aluminium avec une base ou par hydrolyse d'alcoxydes d'aluminium tels que le triéthoxyde d'aluminium.

Le malaxage peut être effectué par toute manière connue de l'homme du métier, et notamment à l'aide d'un malaxeur bras en Z ou un mélangeur bi-vis.

On peut ajouter de l'eau pour ajuster la viscosité de la pâte à extruder.

Les extrudés d'alumine selon l'invention présentent généralement et de préférence un volume poreux total (VPT) d'au moins 0,6 cm$^3$/g, de préférence d'au moins 0,65.

Ce VPT est mesuré de la façon suivante : on détermine la valeur de la densité de grain et de la densité absolue : les densités de grain (Dg) et absolue (Da) sont mesurées par la méthode de picnométrie respectivement au mercure et à l'hélium, le VPT est donné par la formule :

$$VPT = \frac{1}{Dg} - \frac{1}{Da} \, .$$

Les extrudés selon l'invention présentent également généralement et de préférence un diamètre moyen mésoporeux compris entre 150 et 360 Å (Angström). Le diamètre moyen mésoporeux pour des extrudés donnés est mesuré sur la base de la représentation graphique de la répartition poreuse desdits extrudés. Il s'agit du diamètre dont le volume V associé sur la représentation graphique vaut :

$$V = V_{100nm} + \frac{V_{6nm} - V_{100nm}}{2}$$

avec $V_{100nm}$ représentant le volume créé par les pores de diamètre supérieur à 100 nm (macropores) ou volume macroporeux.

$V_{6nm}$ représentant le volume créé par les pores de diamètre supérieur à 6 nm.

$V_{6nm}$ - $V_{100nm}$ représentant le volume mésoporeux i.e. le volume créé par les pores de diamètre compris entre 6 nm et 100 nm, c'est-à-dire le volume créé par tous les pores de taille comprise entre 6 nm et 100 nm (mésopores).

Ces volumes sont mesurés par la technique de la pénétration du mercure dans laquelle on applique la loi de Kelvin qui donne la relation entre la pression, le diamètre du plus petit pore dans lequel le diamètre pénètre à ladite pression, l'angle de mouillage et la tension superficielle selon la formule :

$$\varnothing = (4t \cos\theta).10 \, / \, P$$

dans laquelle

$\varnothing$ représente le diamètre du pore (nm),

t la tension superficielle (48,5 Pa),

$\theta$ l'angle de contact, ($\theta$ = 140 degrés) et

P la pression (MPa).

Les extrudés présentent un volume mésoporeux ($V_{6nm}$ - $V_{100nm}$) d'au moins 0,3 cm$^3$/g, voire d'au moins 0,5 cm$^3$/g.

Les extrudés présentent un volume macroporeux ($V_{100nm}$) d'au plus 0,5 cm$^3$/g. Selon une variante, le volume macroporeux ($V_{100nm}$) est d'au plus 0,3 cm$^3$/g, encore plus préférentiellement d'au plus 0,1 cm$^3$/g voire d'au plus 0,08 cm$^3$/g.

Habituellement, ces extrudés présentent un volume microporeux ($V_{0-6nm}$) d'au plus 0,55 cm$^3$/g, de préférence d'au plus 0,2 cm$^3$/g. Le volume microporeux représente le volume créé par les pores de diamètre inférieur à 6 nm.

Une telle répartition poreuse qui minimise la proportion de pores inférieurs à 6 nm et de ceux supérieurs à 100 nm tout en augmentant la proportion des mésopores (dont le diamètre est compris entre 6 nm et 100 nm) est particulièrement adaptée aux contraintes diffusionnelles de l'hydrotraitement de coupes hydrocarbonées lourdes.

Selon une variante préférée, la répartition poreuse sur le domaine de diamètre de pores compris entre 6 nm et 100 nm (mésopores) est extrêmement resserrée autour de 15 nm, c'est-à dire que sur ledit domaine la majorité des pores ont un diamètre compris entre 6 nm et 50 nm, de préférence entre 8 nm et 20 nm.

Les extrudés selon l'invention présentent une surface spécifique (SS) d'au moins 120 m$^2$/g, de préférence d'au moins 150 m$^2$/g. Cette surface est une surface BET. On entend par surface BET, la surface spécifique déterminée par adsorption d'azote conformément à la norme ASTM D 3663-78 établie à partir de la méthode BRUNAUER - EMMETT - TELLER décrite dans le périodique "The Journal of the American Society", 60, 309 (1938).

On préfère les extrudés selon l'invention dont le diamètre est compris entre 0,5 et 10 mm, de préférence entre 0,8 et 3,2 mm, et la longueur comprise entre 1 mm et 20 mm, de préférence entre 1 et 10 mm, notamment lorsque ledit catalyseur est mis en oeuvre en lit fixe.

Ces extrudés présentent en général un écrasement grain à grain (EGG) d'au moins 0,68 daN/mm pour des extrudés de diamètre 1,6 mm, de préférence d'au moins 1 mm, et une résistance à l'écrasement (ESH) d'au moins 1 MPa.

La méthode de mesure de l'écrasement grain à grain (EGG) consiste à mesurer la forme de compression maximale que peut supporter un extrudé avant sa rupture, lorsque le produit est placé entre deux plans se déplaçant à la vitesse constante de 5 cm/min.

La compression est appliquée perpendiculairement à l'une des génératrices de l'extrudé, et l'écrasement grain à grain est exprimé comme le rapport de la force à la longueur de la génératrice de l'extrudé.

La méthode de mesure de la résistance à l'écrasement (ESH) consiste à soumettre une certaine quantité d'extrudés à une pression croissante au dessus d'un tamis et à récupérer les fines issues de l'écrasement des extrudés. La résistance à l'écrasement correspond à la force exercée pour obtenir un taux de fines représentant 0,5 % du poids des extrudés soumis au test.

L'alumine utilisée dans l'invention est constituée essentiellement d'une pluralité d'agglomérats juxtaposés, chacun de ces agglomérats se présente généralement et de préférence en partie sous la forme d'empilements de feuillets et en partie sous la forme d'aiguilles, lesdites aiguilles étant uniformément dispersées à la fois autour des empilements de feuillets et entre les feuillets.

En général, la longueur et la largeur des feuillets varie entre 1 et 5 µm et leur épaisseur est de l'ordre de 10 nm. Ils peuvent être empilés par groupes formant une épaisseur de l'ordre de 0,1 à 0,5 µm, les groupes pouvant être séparés les uns des autres par épaisseur de l'ordre de 0,05 à 0,1 µm.

La longueur des aiguilles peut être comprise entre 0,05 et 0,5 µm ; leur section est de l'ordre de 10 à 20 nm. Ces dimensions sont données par mesure sur les photos des extrudés prises au microscope électronique. Les feuillets d'alumine comprennent principalement de l'alumine χ et de l'alumine η et les aiguilles de l'alumine γ.

La structure en feuillets est caractéristique de la filiation hydrargillite de l'alumine, ce qui signifie que ces extrudés avant activation par calcination présentent cette même structure, les feuillets étant de nature hydrargillite. Par calcination, cette alumine sous forme hydrargillite se transforme principalement en alumines déshydratées χ et η.

Par contre, la structure en aiguilles est caractéristique de la filiation boehmite, ce qui signifie que ces extrudés avant activation par calcination présentent cette même structure, les aiguilles étant de nature boehmite. Puis, par calcination, cette alumine sous forme boehmite se transforme en alumine déshydratée γ.

Les extrudés sont donc obtenus par calcination, les extrudés avant calcination étant constitués de feuillets à base d'alumine hydrargillite, lesdits feuillets étant entourés en périphérie des aiguilles à base d'alumine boehmite.

Le procédé de mise en forme selon l'invention convient plus particulièrement à une alumine de départ issue de la déshydratation rapide de l'hydrate de Bayer (hydrargillite) qui est un hydroxyde d'aluminium industriel facilement accessible et très bon marché.

Une telle alumine est notamment obtenue par déshydratation rapide d'hydrargillite à l'aide d'un courant de gaz chauds, la température d'entrée des gaz dans l'appareillage variant généralement de 400 à 1200 °C environ, le temps de contact de l'alumine avec les gaz chauds étant généralement compris entre une fraction de seconde et 4-5 secondes ; un tel procédé de préparation de poudre d'alumine a particulièrement été décrit dans le brevet FR-A-1 108 011.

L'alumine ainsi obtenue peut être utilisée telle quelle ou peut subir avant l'étape **b₁** un traitement pour éliminer notamment les alcalins présents: une teneur en $Na_2O$ inférieure à 0,5 % en poids peut être préférée.

De préférence, on réhydrate l'alumine de départ au cours de l'étape b₁ de manière à ce qu'elle présente un taux d'alumine de type boethmite d'au moins 3% en poids, de préférence d'au plus 40% en poids.

Les catalyseurs peuvent ainsi, notamment, être utilisés dans tous les procédés d'hydroraffinage et d'hydroconversion de charges hydrocarbonnées telles que les coupes pétrolières, les coupes issus du charbon, les extraits de sables bitumeux et de schistes bitumeux, ou les hydrocarbures produits à partir de gaz naturel et plus particulièrement pour l'hydrogénation, l'hydrodéazotation, l'hydrodéoxygénation, l'hydrodéaromatisation, l'hydroisomérisation, l'hydrodealkylation, l'hydrodéparaffinage, la deshydrogénation, l'hydrocraquage l'hydrodésulfuration et l'hydrodémé-tallisation de charges carbonées contenant des composés aromatiques, et/ou oléfiniques, et/ou naphténiques, et/ou paraffiniques, lesdites charges contenant éventuellement des métaux, et/ou de l'azote, et/ou de l'oxygène, et/ou du soufre. Il est en particulier possible en modifiant les paramètres de préparation du support, essentiellement à base d'alumine, d'obtenir différentes distributions poreuses et ainsi de modifier les taux d'hydrodésulfuration (HDS) et d'hydrodémétallation (HDM).

Les réactions d'hydroraffinage et d'hydroconversion de charges hydrocarbonnées (hydrotraitement) peuvent être réalisées dans un réacteur contenant le catalyseur selon l'invention disposé en lit fixe. Lesdits hydrotraitements peuvent être appliqués par exemple aux fractions pétrolières telles que les pétroles bruts de degré API inférieur à 20, les extraits de sables bitumeux et de schistes bitumeux, les résidus atmosphériques, les résidus sous vide, les asphaltes, les huiles désasphaltées, les résidus sous vide désasphaltés, les bruts désasphaltés, les fuels lourds, les distillats atmosphériques et les distillats sous vide, ou encore à d'autres hydrocarbures tels que les liquéfiats du charbon. Dans un procédé en lit fixe, les hydrotraitements destinés à éliminer les impuretés telles que le soufre, l'azote, les métaux, et à abaisser le point d'ébullition moyen de ces hydrocarbures sont habituellement mis en oeuvre à une température d'environ 320 à environ 450 degrés C, de préférence environ 350 à 430 degrés C, sous une pression partielle d'hydrogène d'environ 3 MPa (méga Pascal) à environ 30 MPa, de préférence 5 à 20 Mpa, à une vitesse spatiale d'environ 0,1 à environ 5 volumes de charge par volume de catalyseur et par heure, de préférence 0,2 à 1 volumes par volume de catalyseur et par heure, le rapport hydrogène gazeux sur charge liquide d'hydrocarbures étant compris entre 200 et 5000 normaux mètres cubes par mètre cube ($Nm^3/m^3$), de préférence entre 500 et 1500 ($Nm^3/m^3$).

Les exemples donnés ci-après illustrent l'invention sans en limiter la portée.

## Exemple 1: Préparation du support alumine A rentrant dans la composition des catalyseurs A1 et A2

**Etape a₁ - Alumine de départ -** La matière première est de l'alumine obtenue par décomposition très rapide de l'hydrargillite dans un courant d'air chaud (T = 1000°C). Le produit obtenu est constitué d'un mélange d'alumines de transition : alumines (khi) et (rho). La surface spécifique de ce produit est de 300 $m^2/g$ et la perte au feu (PAF) de 5 %.

**Etape b₁ - Réhydratation -** L'alumine est soumise à une réhydratation par mise en suspension dans l'eau à une concentration de 500 g/l à une température de 90 °C pendant une durée de 48 h en présence de 0,5 % d'acide citrique.

Après filtration de la suspension, on récupère un gâteau d'alumine qui est lavé à l'eau puis séché à une température de 140 °C pendant 24 h.

L'alumine obtenue est sous forme de poudre, sa perte au feu (PAF), mesurée par calcination à 1000°C, et son taux d'alumine sous forme boehmite, mesuré par diffraction des rayons X, sont rassemblés dans le tableau 1.

**Etape c₁ - Malaxage -** On introduit 10 kg de la poudre réhydratée et séchée dans un malaxeur bras en Z de volume 25 l, puis on ajoute peu à peu une émulsion d'hydrocarbure dans l'eau stabilisée par un agent tensioactif, préalablement obtenue dans un réacteur agité, et de l'acide nitrique à 69%. Les caractéristiques sont rassemblées dans le tableau 1.

Le malaxage est prolongé jusqu'à l'obtention d'une pâte homogène consistante. A la fin du malaxage, on ajoute une solution d'ammoniaque à 20 % de façon à neutraliser l'excès d'acide nitrique tout en poursuivant le malaxage pendant 3 à 5 min.

**Etape d₁ - Extrusion -** La pâte obtenue est introduite dans une extrudeuse monovis pour l'obtention d'extrudés crus de diamètre 1,6 mm.

**Etape e₁ - Séchage/calcination -** Les extrudés sont ensuite séchés à 140 °C pendant 15 h et calcinés pendant 2 h à une température de 680°C. Le support ainsi calciné présente une surface spécifique de 148 m2/g.

**Etape f₁ - Traitement hydrothermal -** Les extrudés obtenus sont imprégnés par une solution d'acide nitrique et d'acide acétique dans les concentrations suivantes : 3,5 % d'acide nitrique par rapport au poids d'alumine et 6,5 % d'acide acétique par rapport au poids d'alumine. Puis ils sont soumis à un traitement hydrothermal dans un autoclave à panier rotatif dans les conditions définies dans le tableau 1.

**Etape g₁ - Séchage/calcination -** A la fin de ce traitement les extrudés sont soumis à une calcination à une température de 550 °C pendant 2 h. Le taux de boehmite indiqué au tableau 1 est mesuré sur les extrudés avant calcination finale.

Le support d'alumine extrudé A est obtenu, dont les caractéristiques sont rassemblées dans le tableau 1.

### Exemple 2: Préparation du catalyseur A1 (selon l'invention).

Nous avons imprégné à sec le support extrudé A de l'exemple 1 par une solution aqueuse renfermant des sels de molybdène et de nickel. Le sel de molybdène est l'heptamolybdate d'ammonium $Mo_7O_{24}(NH_4)_6.4H_2O$ et celui de nickel est le nitrate de nickel $Ni(NO_3)_2.6H_2O$.

Après maturation à température ambiante dans une atmosphère saturée en eau, les extrudés imprégnés sont séchés une nuit à 120°C puis calcinés à 550°C pendant 2 heures sous air. La teneur finale en trioxyde de molybdène est de 6,5% poids et celle en en oxyde de nickel NiO est de 1,4% poids.

### Exemple 3: Préparation du catalyseur A2 (selon l'invention).

Nous avons imprégné à sec le support extrudé A de l'exemple 1 par une solution aqueuse renfermant des sels de nickel (nitrate de nickel $Ni(NO_3)_2.6H_2O$).

Après maturation à température ambiante dans une atmosphère saturée en eau, les extrudés imprégnés sont séchés une nuit à 120°C puis calcinés à 550°C pendant 2 heures sous air. La teneur finale en oxyde de nickel NiO est de 5% poids.

### Exemple 4: Préparation du support d'alumine B rentrant dans la composition du catalyseur B.

On met en oeuvre les mêmes étapes que dans l'exemple 1 si ce n'est que l'étape **c1** de malaxage est mise en oeuvre de la manière suivante.

**Etape $c_1$- Malaxage -** Il s'agit d'un procédé continu en malaxeur bivis corrotatives.

En amont du malaxeur, on introduit la poudre d'alumine réhydratée et séchée à un débit de 90 kg/h. Dans un réacteur agité, on prépare une émulsion de pétrole dans l'eau, en introduisant :

- 5,46 kg d'eau,
- 10,04 kg d'acide nitrique à 69 %,
- 10,4 kg de pétrole,
- 1,56 kg de Soprophor SC138.

Cette émulsion est introduite à raison de 27,46 kg/h dans le fourreau de la machine bivis qui suit immédiatement l'introduction de la poudre d'alumine.

En fin de machine, on introduit une solution d'ammoniaque à 28 % à raison de 4,34 kg/h. Le temps de passage de la poudre dans la machine est de l'ordre de 50 à 60 s. A la sortie de la machine, on obtient une pâte homogène qui peut être extrudée.

Le taux de boehmite est mesuré sur les extrudés avant calcination finale.

Le support d'alumine extrudé B est obtenu, dont les caractéristiques sont rassemblées dans le tableau 1.

Tableau 1

| | Alumine A | Alumine B |
|---|---|---|
| **Alumine réhydratée - Fin étape b1** | | |
| % boehmite | 24 | 33 |
| PAF (1000°C) | 25 | 23 |
| **Malaxage - Etape c1** | | |
| Nature hydrocabure | pétrole | pétrole |
| %HNO3/Al2O3* | 10 | 10 |
| % hydrocaruure/Al2O3* | 15 | 15 |
| eau/hydrocarbure | 3,7 | 2,6 |
| Nature agent tensio-actif | Galoryl EM10 | Soprophor SC138 |
| % agent tensio-actif/hydrocarbure | 17 | 15 |

Tableau 1   (suite)

|  | Alumine A | Alumine B |
|---|---|---|
| **Malaxage - Etape c1** | | |
| Temps(h) | 2,15 | |
| % neutralisation par rapport à HNO3 en équiv. | 65 | 65 |
| **Séchage/calcination - Etape e1** | | |
| Température calcination (°C) | 680 | 600 |
| Surface spécifique (m2/g) | 148 | 177 |
| **Traitement hydrothermal - Etape f1** | | |
| Température (°C) | 212 | 202 |
| Pression (bar) | 19 | 16 |
| Temps (h) | 2 | 2 |
| % boehmite | 40 | 43 |
| **Caractéristiques des extrudés calcinés obtenus** | | |
| VPT ($cm^3$/g) | 0,80 | 0,66 |
| $V_{6nm}$-$V_{100nm}$ ($cm^3$/g) | 0,60 | 0,66 |
| $V_{100nm}$ ($cm^3$/g) | 0,19 | < 0,02 |
| diam. moyen mésopores(nm) | 28 | 24,5 |
| $V_{0-6nm}$ ($cm^3$/g) | 0,02 | 0,01 |
| Surface spécifique (m2/g) | 140 | 152 |
| EGG (daN/mm) | 1,2 | 1,1 |
| ESH (MPa) | 1,58 | 1,58 |

### Exemple 5: Préparation du catalyseur B (selon l'invention).

Nous avons imprégné à sec le support extrudé de l'exemple 4 par une solution aqueuse renfermant des sels de molybdène et de nickel. Le sel de molybdène est l'heptamolybdate d'ammonium $Mo_7O_{24}(NH_4)_6.4H_2O$ et celui de nickel est le nitrate de nickel $Ni(NO_3)_2.6H_2O$.

Après maturation à température ambiante dans une atmosphère saturée en eau, les extrudés imprégnés sont séchés une nuit à 120°C puis calcinés à 550°C pendant 2 heures sous air. La teneur finale en trioxyde de molybdène est de 12,5% poids et celle en en oxyde de nickel NiO est de 3,0% poids.

### Exemple 6: Préparation du support alumine C rentrant dans la composition des catalyseurs C1 et C2.

### Etape a2 - Alumine de départ -

On utilise la même alumine que dans l'exemple 1.

### Etape b$_2$ - Formation de billes -

L'alumine est mélangée avec de la farine de bois comme porogène (20% en poids par rapport à l'alumine), puis mise en forme dans un granulateur à bol tournant. Pour permettre cette mise en forme, on ajoute de l'eau. Les billes d'alumine obtenues présentent un diamètre compris entre 1,5 et 4 mm.

### Etape c$_2$ - Mûrissement des billes -

Ces billes sont soumises à un mûrissement par passage de vapeur d'eau, la température des billes imposée est de 90 °C pendant 20 h. Les billes obtenues présentent une perte au feu de 47,5 % et contiennent 25 % en poids

de boehmite.

**Etape d$_2$ - Malaxage/extrusion -**

Le procédé de malaxage utilisé est un procédé continu dans un malaxeur bivis corrotatives.

En amont du malaxeur, on introduit les billes d'alumine à un débit de 90 kg/h. Dans le fourreau qui suit immédiatement l'introduction des billes mûries, on introduit une solution d'acide nitrique à 2,42 % à un débit de 10,9 kg/h.

En fin de machine, on introduit une solution d'ammoniaque à 2,1 % à un débit de 4,2 kg/h. Le temps de passage de la matière dans la machine est de l'ordre de 50 s.

A la sortie du malaxeur, on obtient une pâte d'alumine homogène qui peut être extrudée.

On extrude la pâte obtenue à travers une filière présentant des orifices de diamètre 1,6 mm.

**Etape e$_2$ - Séchage/calcination -**

Les extrudés sont ensuite séchés à 140 °C pendant 2 h et calcinés pendant 2 h à une température de calcination indiquée dans le tableau 3. Les extrudés ainsi calcinés présentent une surface spécifique qui est ajustée entre 120 et 200 m2/g.

**Etape f$_2$ - Traitement hydrothermal -**

Les extrudés obtenus sont imprégnés par une solution d'acide nitrique et d'acide acétique dans les concentrations suivantes : 3,5 % d'acide nitrique par rapport au poids d'alumine et 6,5 % d'acide acétique par rapport au poids d'alumine. Puis ils sont soumis à un traitement hydrothermal dans un autoclave à panier rotatif dans les conditions définies dans le tableau 2.

**Etape g$_2$ - Séchage/calcination -**

A la fin de ce traitement les extrudés sont soumis à une calcination à une température de 550°C pendant 2 h.

Le taux de boehmite est mesuré sur les extrudés avant calcination finale. Le support d'alumine extrudé C est obtenu, dont les caractéristiques sont rassemblées dans le tableau 2.

Tableau 2

| | Alumine C |
|---|---|
| **Séchage/calcination - Etape e2** | |
| Température calcination (°C) | 700 |
| Surface spécifique (m2/g) | 140 |
| **Traitement hydrothermal -Etape f2** | |
| Température (°C) | 204 |
| Pression (bar) | 16 |
| Temps (h) | 2 |
| % boehmite | 30 |
| **Caractéristiques des extrudés calcinés obtenus** | |
| VPT (cm$^3$/g) | 0,81 |
| $V_{6nm}$-$V_{100nm}$ (cm$^3$/g) | 0,66 |
| $V_{100nm}$ (cm$^3$/g) | 0,15 |
| diam. moyen mésopores (nm) | 25 |
| $V_{0-6nm}$ (cm$^3$/g) | 0 |
| Surface spécifique (m2/g) | 141 |
| EGG (daN/mm) | 0,90 |
| ESH (MPa) | 1,24 |

**EP 0 903 177 B1**

## Exemple 7: Préparation du catalyseur C1 (selon l'invention).

Nous avons imprégné à sec le support extrudé de l'exemple 6 par une solution aqueuse renfermant des sels de molybdène et de nickel. Le sel de molybdène est l'heptamolybdate d'ammonium $Mo_7O_{24}(NH_4)_6.4H_2O$ et celui de nickel est le nitrate de nickel $Ni(NO_3)_2.6H_2O$.
Après maturation à température ambiante dans une atmosphère saturée en eau, les extrudés imprégnés sont séchés une nuit à 120°C puis calcinés à 550°C pendant 2 heures sous air. La teneur finale en trioxyde de molybdène est de 11,8% poids et celle en en oxyde de nickel NiO est de 2,5% poids.

## Exemple 8: Préparation du catalyseur C2 (selon l'invention).

Nous avons imprégné à sec le support extrudé de l'exemple 6 par une solution aqueuse renfermant des sels de molybdène (heptamolybdate d'ammonium $Mo_7O_{24}(NH_4)_6.4H_2O$).
Après maturation à température ambiante dans une atmosphère saturée en eau, les extrudés imprégnés sont séchés une nuit à 120°C puis calcinés à 550°C pendant 2 heures sous air. La teneur finale en trioxyde de molybdène est de 12,2% poids.

## Exemple 9: Préparation du support D (comparatif).

On prépare des billes d'alumine à partir de l'alumine de départ de l'exemple 1. L'alumine est broyée avec un broyeur à boulets, pour obtenir une poudre dont le diamètre moyen des particules est de 7 μm.
Cette alumine est mélangée avec de la farine de bois comme porogène (15% en bois), puis mise en forme dans un granulateur ou drageoir. Pour permettre cette mise en forme, on ajoute de l'eau.
Les billes obtenues sont séchées et calcinées, puis sont soumises à une étape de maturation par passage de vapeur d'eau à 100°C pendant 24 heures.
Ces billes sont immergées dans une solution d'acide acétique à 50 g/l pendant environ 5 heures.
Elles sont alors retirées de la solution, égouttées puis introduites dans un autoclave pendant 2 heures environ, à une température de 210°C sous une pression de 20,5 bars.
En sortie d'autoclave, les billes sont séchées pendant 4 heures à 100°C et calcinées pendant 2 heures à 650°C.
Les billes de granulométrie comprise entre 1,2 et 2,8 mm sont sélectionnées.

## Exemple 10: Préparation du catalyseur D (comparatif).

Le support D sous forme de billes de l'exemple 9 est imprégné a sec par une solution aqueuse renfermant des sels de molybdène et de nickel. Le sel de molybdène est l'heptamolybdate d'ammonium $Mo_7O_{24}(NH_4)_6.4H_2O$ et celui de nickel est le nitrate de nickel $Ni(NO_3)_2.6H_2O$.
Après maturation à température ambiante dans une atmosphère saturée en eau, les extrudés imprégnés sont séchés une nuit à 120°C puis calcinés à 550°C pendant 2 heures sous air.. La teneur finale en trioxyde de molybdène est de 11,0% poids et celle en en oxyde de nickel NiO est de 2,6% poids. Les caractéristiques des billes de catalyseur D obtenues sont rassemblées dans le tableau 3.

Tableau 3

|  | Catalyseur D |
|---|---|
| **Caractéristiques des billes** | |
| VPT ($cm^3$/g) | 0,97 |
| $V_{6nm}$-$V_{100nm}$ ($cm^3$/g) | 0,66 |
| $V_{100nm}$ ($cm^3$/g) | 0,31 |
| diam. moyen (nm) | 25 |
| $V_{0-6nm}$ ($cm^3$/g) | 0 |
| Surface spécifique (m2/g) | 119 |
| ESH (MPa) | 1,48 |

**Exemple 11: Tests d'hydroconversion de résidus pétroliers par les catalyseurs A1, A2, B, C1, C2 et D**

Les catalyseurs A1, A2, B, C1, C2 et D précédemment décrits ont été comparés en test d'hydrotraitement de différents résidus pétroliers. Il s'agit en premier lieu d'un résidu atmosphérique (RA) d'origine Moyen Orient (Arabian Light) et d'autre part d'un résidu atmosphérique de brut extra lourd vénézuélien (Boscan). Ces deux résidus sont caractérisés par des viscosités élevées, des fortes teneurs en carbone Conradson et asphaltènes. Le RA Boscan contient en plus des teneurs très élevées en nickel et vanadium.

Les caractéristiques de ces résidus sont reportées dans le tableau suivant :

| | | | RA Arabian Light | RA Boscan |
|---|---|---|---|---|
| | | | S4658 | S3345 |
| Densité 15/4 | | | 0,959 | 1,023 |
| Viscosité à 100 °C | | mm$^2$/s | 25,6 | 1380 |
| Viscosité à 150 °C | | mm$^2$/s | 7,66 | 120 |
| Soufre | | % pds | 3,34 | 5,5 |
| Azote | | ppm | 2075 | 5800 |
| Nickel | | ppm | 9 | 125 |
| Vanadium | | ppm | 35 | 1290 |
| Fer | | ppm | 1 | 8 |
| Carbone | | % pds | 84,7 | 83,40 |
| Hydrogène | | % pds | 11,2 | 10,02 |
| Carbone aromatique | | % | 26 | 29,0 |
| Masse moléculaire | | g/mol | 460 | 730 |
| Carbone Conradson | | % pds | 9,5 | 16,9 |
| Asphaltènes C5 | | % pds | 5,6 | 24,1 |
| Asphaltènes C7 | | % pds | 3,1 | 14,9 |
| **SARA** | | % pds | | |
| | Saturés | % pds | 30,7 | 8,7 |
| | Aromatiques | % pds | 47,5 | 35,0 |
| | Résines | % pds | 17,6 | 34,0 |
| | Asphaltènes | % pds | 3,0 | 14,6 |
| **Distillation simulée** | | | | |
| | PI | °C | 229 | 224 |
| | 5% | °C | 325 | 335 |
| | 10% | °C | 358 | 402 |
| | 20% | °C | 404 | 474 |
| | 30% | °C | 436 | 523 |
| | 40% | °C | 468 | 566 |
| | 50% | °C | 503 | |
| | 60% | °C | 543 | |
| | 70% | °C | 590 | |
| | 80% | °C | 642 | |

Les tests sont menés dans une unité pilote d'hydrotraitement de résidus pétroliers comportant un réacteur tubulaire en lit fixe. Le réacteur est rempli avec un litre de catalyseur. L'écoulement des fluides (résidu pétrolier + recyclage d'hydrogène) est ascendant dans le réacteur. Ce type d'unité pilote est représentatif du fonctionnement de l'un des réacteurs de l'unité HYVAHL de l'IFP d'hydroconversion de résidus en lits fixes.

Après une étape de sulfuration par circulation dans le réacteur d'une coupe gazole additionnée de DMDS à une température finale de 350°C, on opère l'unité avec les résidus pétroliers décrits ci dessus dans les conditions opératoires suivantes :

| | |
|---|---|
| Pression totale | 15 MPa |

(suite)

| Température | 380°C |
|---|---|
| Vitesse spatiale horaire du résidu | 0,5 h$^{-1}$ |
| Recyclage d'hydrogène | 1000 std l. H$_2$/l. charge |
| Température de début de cycle | 370°C |

On commence par injecter le RA Arabian Light. Après une période de stabilisation de 250 heures, les performances en hydrodésulfuration (HDS) et en hydrodémétallation (HDM) sont les suivantes :

| Catalyseur | HDS (% poids) | HDM (% poids) |
|---|---|---|
| Catalyseur A1 | 66 | 78 |
| Catalyseur A2 | 58 | 72 |
| Catalyseur B | 68 | 75 |
| Catalyseur C1 | 65 | 77 |
| Catalyseur C2 | 61 | 75 |
| Catalyseur D | 60 | 75 |

Le taux d'HDS est défini de la façon suivante :

HDS (% pds) = ((%pds S)charge-(%pds S)recette)/(%pds S)charge * 100

Le taux d'HDM est défini de la façon suivante :

HDM (% pds) = ((ppm pds Ni+V)charge - (ppm pds Ni+V)recette)/(ppm pds

Ni+V)charge * 100

On procède ensuite au changement de charge par passage sur résidu atmophérique Boscan. La conduite du test vise à maintenir un taux d'HDM constant autour de 80% poids tout au long du cycle. Pour cela, on compense la désactivation du catalyseur par une augmentation progressive de la température réactionnelle. On arrête le test lorsque la température réactionnelle atteint 420°C, température considérée comme représentative de la température de fin de cycle d'une unité industrielle d'hydroconversion de résidus.
Le tableau suivant compare les quantités de nickel+vanadium en provenance du RA Boscan déposés sur les 6 catalyseurs ainsi que le niveau d'HDS en milieu de cycle.

| Catalyseur | Ni+V déposés (% de la masse de catalyseur frais) | HDS en milieu de cycle (% poids) |
|---|---|---|
| Catalyseur A1 | 80 | 52 |
| Catalyseur A2 | 82 | 50 |
| Catalyseur B | 35 | 58 |
| Catalyseur C1 | 82 | 54 |
| Catalyseur C2 | 85 | 52 |
| Catalyseur D | 80 | 50 |

Il apparaît donc que les catalyseurs d'HDM sous forme d'extrudés de la présente invention peuvent conduire à des performance en HDS supérieures à celles du catalyseur D (exemple comparatif) tout en assurant des performances identiques à la fois en HDM et en rétention en métaux nickel+vanadium. Des performances en HDS supérieures sont observées à la fois sur un résidu atmosphérique arabe léger et Boscan. En jouant sur les paramètres de préparation de l'alumine, il est donc possible d'obtenir différentes distributions poreuses et ainsi de modifier les taux d'HDS et d'HDM.

**Revendications**

1. Procédé de préparation d'un catalyseur comprenant un support extrudé essentiellement à base d'alumine, et constitué essentiellement d'une pluralité d'agglomérats juxtaposés, au moins un métal catalytique ou un composé de métal catalytique du groupe VIB (groupe 6 de la nouvelle notation de la table périodique des éléments) et au moins un métal catalytique ou un composé de métal catalytique du groupe VIII (groupe 8, 9 et 10 de la nouvelle notation de la table périodique des éléments), dans lequel la somme S des métaux des groupes VIB et VIII exprimés en oxydes est comprise entre 0,5% et 50% poids, dans lequel le procédé de mise en forme de l'alumine comprend soit les étapes suivantes:

   $a_1$ ou $a_3$. on part d'une alumine de départ issue de la déshydratation rapide d'hydragillite,
   $b_1$ ou $b_3$. on réhydrate l'alumine de départ,
   $c_1$. on malaxe l'alumine réhydratée en présence d'une émulsion d'au moins un hydrocarbure dans l'eau, ou
   $c_3$. on malaxe l'alumine réhydratée avec un gel de pseudo-boehmite, ledit gel étant présent dans une teneur comprise entre 1 et 30% en poids par rapport à l'alumine réhydratée et au gel,
   $d_1$ ou $d_3$. on extrude la pâte à base d'alumine obtenue à l'étape $c_1$ ou $c_3$,
   $e_1$ ou $e_3$. on sèche et on calcine les extrudés,
   $f_1$ ou $f_3$. on soumet les extrudés issus de l'étape $e_1$ ou $e_3$ à un traitement hydrothermal acide en atmosphère confinée,
   $g_1$ ou $g_3$. on sèche et calcine les extrudés issus de l'étape $f_1$ ou $f_3$,

   soit les étapes suivantes:

   $a_2$. on part d'une alumine de départ issue de la déshydratation rapide d'hydragillite,
   $b_2$. on met en forme l'alumine sous forme de billes en présence d'un porogène,
   $c_2$. on fait murir les billes d'alumine obtenues,
   $d_2$. on malaxe les billes issues de l'étape $c_2$ ce par quoi on obtient une pâte que l'on extrude,
   $e_2$. on sèche et on calcine les extrudés obtenus,
   $f_2$. on soumet les extrudés issus de l'étape $e_2$ à un traitement hydrothermal acide en atmosphère confinée,
   $g_2$. on sèche et calcine les extrudés issus de l'étape $f_2$,

   et dans lequel ledit support présente un volume poreux total d'au moins 0,6 $cm^3$/g, des mésopores ayant un diamêtre moyen compris entre 15 et 36nm, un taux d'alumine issue de la décomposition de boehmite compris entre 5 et 70 % poids, un volume mésoporeux $V_{6nm} - V_{100nm}$ d'au moins 0,3 $cm^3$/g, un volume macroporeux $V_{100\,nm}$ d'au plus 0,5 $cm^3$/g, un volume microporeux $V_{0-6nm}$ d'au plus 0,55 $cm^3$/g, une surface spécifique d'au moins 120 $m^2$/g, ces extrudés se présentant microscopiquement en partie sous la forme d'empilements de feuillets et en partie sous la forme d'aiguilles, lesdites aiguilles étant dispersés à la fois autour des empilements et entre les feuilllets.

2. Procédé selon la revendication 1 dans lequel lesdits métaux catalytiques sont introduits par imprégnation ou comalaxage.

3. Procédé selon l'une quelconque des revendications 1 ou 2 dans lequel le métal du groupe VIB est le molybdène ou le tungstène et le métal du groupe VIII est le fer, le nickel ou le cobalt.

4. Procédé selon l'une quelconque des revendications 1 ou 2, dans lequel le métal du groupe VIB est le molybdène, et le métal du groupe VIII est le nickel.

5. Procédé selon l'une quelconque des revendications 1 à 4, dans lequel les extrudés d'alumine ont un diamêtre compris entre 0,5 et 10 mm.

6. Procédé selon la revendication 1 dans lequel le procédé de mise en forme de l'alumine comprend les étapes $a_1, b_1, c_1, d_1, e_1, f_1$ et $g_1$ et comprend en outre avant l'étape $b_1$ un traitement pour éliminer les alcalins présents jusqu'à une teneur en $Na_2O$ inférieur à 0,5 % en poids.

EP 0 903 177 B1

**Patentansprüche**

1. Verfahren zur Herstellung eines Katalysators mit einem im wesentlich auf der Grundlage von Aluminiumoxid extrudierten Basismaterial, welcher im wesentlichen aus einer Vielzahl von nebeneinanderliegenden Agglomeraten, mindestens ein katalytisches Metall oder eine katalytische Metallverbindung aus der Gruppe VIB (Gruppe 6 der neuen Bezeichnung des Periodensystems der Elemente) und mindestens ein katalytisches Metall oder eine katalytische Metallverbindung aus der Gruppe VIII (Gruppe 8, 9 und 10 der neuen Bezeichnung des Periodensystems der Elemente) aufgebaut ist, in welchem die in Oxiden ausgedrückte Summe S der Metalle der Gruppen VIB und VIII zwischen 0,5% und 50 Gewichts-% liegt, bei welchem das Verfahren zur Darstellung des Aluminiumoxid entweder die folgenden Schritte:

   a1 oder a3. man geht von einem aus der schnellen Dehydratisierung von Aluminiumhydroxid stammenden Ausgangs-Aluminiumoxid aus,

   b1 oder b3. man rehydratiert das Ausgangs-Aluminiumoxid,

   c1. man durchknetet das rehydratierte Aluminiumoxid in Anwesenheit einer Emulsion aus mindestens eines Kohlenwasserstoffs in Wasser, oder

   c3. man durchknetet das rehydratierte Aluminiumoxid mit einem Gel aus Pseudo-Boehmit, wobei das besagte Gel mit einem Gehalt zwischen 1 und 30 Gewichts-% im Verhältnis zum rehydratierten Aluminiumoxid und zum Gel vorhanden ist,

   d1 oder d3. man extrudiert das Gemisch auf Aluminiumoxid-Grundlage, welches man im Schritt c1 oder c3 erhalten hat,

   e1 oder e3. man trocknet und man kalziniert die Extrusionen,

   f1 oder f3. man unterzieht die Extrusionen aus den Schritten e1 oder e3 einer sauren hydrothermalen Behandlung in stickiger Atmosphäre,

   g1 oder g3. man trocknet und kalziniert die Extrusionen aus den Schritten f1 oder f3,

   oder die folgenden Schritten umfaßt:

   a2. man geht von einem aus der schnellen Dehydratisierung von Aluminiumhydroxid stammenden Ausgangs-Aluminiumoxid aus,

   b2. man bereitet das Aluminiumoxid in Form von kleinen Kugeln in Anwesenheit eines Schaumerzeugers auf,

   c2. man läßt die erhaltenen kleinen Kugeln aus Aluminiumoxid reifen,

   d2. man durchknetet die kleinen Kugeln aus dem Schritt c2, wodurch man ein Gemisch erhält, welches man extrudiert,

   e2. man trocknet und man kalziniert die erhaltenen Extrusionen,

   f2. man unterzieht die Extrusionen aus dem Schritt e2 einer sauren hydrothermalen Behandlung in stickiger Atmosphäre,

   g2. man trocknet und kalziniert die Extrusionen aus dem Schritt f2,

   und in welchem das besagte Basismaterial ein poröses Gesamtvolumen von mindestens 0,6 cm$^3$/g aufweist, wobei die Kleinporen einen in dem Intervall zwischen 15 und 36 nm liegenden mittleren Durchmesser haben, einen Anteil an Aluminiumoxid aus der Zersetzung von Boehmite, der zwischen 5 und 70 Gewichts-% liegt, ein Kleinporen-Volumen $V_{6nm}$ - $V_{100nm}$ von mindestens 0,3cm$^3$/g, ein Makroporenvolumen $V_{100nm}$ von höchstens 0,5 cm3/g, ein Mikroporenvolumen $V_{0,-6nm}$ von höchstens 0,55 cm$^3$/g, eine spezifische Oberfläche von mindestens 120 m$^2$/g, wobei die Extrusionen in Form von Stapeln von Lamellen und zum Teil in Form von Nadeln auftreten, wobei die besagten Nadeln teilweise um die Stapel herum und zwischen den Lamellen verteilt sind.

2.  Verfahren nach Anspruch 1 in welchem die besagten katalytischen Metalle durch Tränkung oder Zusammenkneten zugeführt werden.

3.  Verfahren nach irgend einem der Ansprüche 1 oder 2, in welchem das Metall der Gruppe VIB Molybdän oder Wolfram und das Metall der Gruppe VIII Eisen, Nickel oder Kobalt ist.

4.  Verfahren nach irgend einem der Ansprüche 1 oder 2, in welchem das Metall der Gruppe VIB Molybdän, das Metall der Gruppe VIII Nickel ist.

5.  Verfahren nach irgend einem der Ansprüche 1 bis 4, in welchem die Aluminiumoxid-Extrusionen einen Durchmesser zwischen 0,5 und 10 mm haben.

6.  Verfahren nach Anspruch 1 in welchem das Verfahren zur Darstellung von Aluminiumoxid die Schritte a1, b1, c1, d1, e1, f1 und g1 umfaßt und außerdem vor dem Schritt b1 eine Behandlung zur Beseitigung der vorhandenen Alkaline bis auf einen $Na_2O$ Gehalt unterhalb von 0,5 Gewichts-% umfaßt.

**Claims**

1.  Process for preparing a catalyst comprising an essentially alumina-based extruded support, essentially constituted by a plurality of juxtaposed agglomerates, at least one catalytic metal or a compound of a catalytic metal from group VIB (group 6 of the new periodic table notation) and at least one catalytic metal or a compound of a catalytic metal from group VIII (group 8, 9 and 10 of the new periodic table notation), in which the sum S of the group VIB and VIII metals, expressed as the oxides, is in the range 0.5 % to 50% by weight, wherein the process for forming the alumina comprises either the following steps:

    $a_1$ or $a_3$ starting with an alumina originating from rapid dehydration of hydrargillite,
    $b_1$ or $b_3$ rehydrating the starting alumina,
    $c_1$ mixing the rehydrated alumina in the presence of an emulsion of at least one hydrocarbon in water, or
    $c_3$ mixing the rehydrated alumina with a pseudo-boehmite gel, said gel being present in an amount in the range 1% to 30% by weight with respect to the rehydrated alumina and the gel,
    $d_1$ or $d_3$ extruding the alumina-based paste obtained from step $c_1$ or $C_3$
    $e_1$ or $e_3$ drying and calcining the extrudates,
    $f_1$ or $f_3$ carrying out a hydrothermal acid treatment in a confined atmosphere on the extrudates from step $e_1$ or $e_3$ ,
    $g_1$ or $g_3$ drying and calcining the extrudates from step $f_1$ or $f_3$,

    either the following steps:

    $a_2$ starting from a starting alumina originating from rapid dehydration of hydrargillite,
    $b_2$ forming the alumina into beads in the presence of a pore-forming agent;
    $c_2$ ageing the alumina beads obtained,
    $d_2$ mixing the beads from step $c_2$ to obtain a paste which is extruded,
    $e_2$ drying and calcining the extrudates obtained,
    $f_2$ carrying out a hydrothermal acid treatment in a confined atmosphere on the extrudates obtained from step $e_2$,
    $g_2$ drying and calcining the extrudates from step $f_2$,

    wherein said support presents a total pore volume of at least 0.6 $cm^3/g$, mesopores of average diameter in the range 15 to 36 nm, an amount of alumina issued from boehmite decomposition in the range 5% to 70% by weight, a mesoporous volume $V_{6nm}$ - $V_{100nm}$ of at least 0.3 $cm^3/g$, a macroporous volume $V_{100nm}$ of at most 0.5 $cm^3/g$ and a microporous volume $V_{0-6nm}$ is at most 0.55 $cm^3/g$, a specific surface area of at least 120 $m^2/g$, these extrudates being partly in the form of packs of flakes and partly in the form of needles, said needles being uniformly dispersed both about the packs of flakes and between the flakes.

2.  Process according to claim 1, wherein said catalytic metals are introduced by impregnation or co-mixing.

3. Process according to claim 1 or 2 wherein the metal from group VIB is molybdenum or tungsten, and the metal from group VIII is iron, nickel or cobalt.

4. Process according to claim 1 or 2 wherein the metal from group VIB is molybdenum, and the metal from group VIII is nickel.

5. Process according to any one of claims 1 to 4, wherein the alumina extrudates have a diameter in the range 0.5 to 10 mm.

6. Process according to claim 1 wherein the process for forming alumina comprises steps $a_1$, $b_1, c_1, d_1, e_1, f_1$ and $g_1$ and further comprises before stage $b_1$ a treatment to eliminate alkali metals present up to a content in $Na_2O$ lower than 0.5 wt%.